## Europäisches Patentamt
## European Patent Office
## Office européen des brevets

(19)

(11) Veröffentlichungsnummer: **0 158 008**
**B1**

(12) EUROPÄISCHE PATENTSCHRIFT

(45) Veröffentlichungstag der Patentschrift:
16.03.88

(51) Int. Cl.⁴: **F 02 B 27/00**, F 02 M 35/10

(21) Anmeldenummer: 85100552.0

(22) Anmeldetag: 19.01.85

(54) Luftansauganlage einer Mehrzylinder-Brennkraftmaschine.

(30) Priorität: 10.03.84 DE 3408899

(43) Veröffentlichungstag der Anmeldung:
16.10.85 Patentblatt 85/42

(45) Bekanntmachung des Hinweises auf die Patenterteilung:
16.03.88 Patentblatt 88/11

(84) Benannte Vertragsstaaten:
DE FR GB IT NL SE

(56) Entgegenhaltungen:
DE-A-1 939 049
DE-B-1 231 060
GB-A-2 027 799
GB-A-2 038 942
US-A-1 761 958
US-A-2 947 293
US-A-2 947 294

SOVIET INVENTIONS ILLUSTRATED, Sektion
Mechanik, Woche D 13, 6. Mai 1981,
Zusammenfassungsnr. C 8047, Q 52, Derwent
Publications Ltd., London, GB; & SU - A - 748 023
(TRANSPORT MACH WKS) 18.07.1980
idem
MOTORTECHNISCHE ZEITSCHRIFT, Band 28, Nr. 4,
1967, Seiten 144-151; E. FIALA et al.:
"Schwingungen in Gaswechselleitungen von
Kolbenmaschinen"

(73) Patentinhaber: **Dr.Ing.h.c. F. Porsche
Aktiengesellschaft, Porschestrasse 42, D-7000
Stuttgart 40 (DE)**

(72) Erfinder: **Rutschmann, Erwin, Dipl.- Ing.,
Bernsteinstrasse 23, D-7506 Bad Herrenalb 3 (DE)**

EP 0 158 008 B1

## Beschreibung

Die Erfindung betrifft eine Luftansauganlage einer Mehrzylinder-Brennkraftmaschine nach dem Oberbegriff des Anspruchs 1.

Bei einer aus US-A-1 761 958 bekannten Brennkraftmaschine mit acht Zylindern, die zu zwei einander gegenüberliegenden Gruppen mit je vier Zylindern zusammengefaßt sind, werden durch ein I-förmiges Verteilerstück zwei Zylinder der einen und zwei Zylinder der anderen Gruppe mit Ansaugluft versorgt. Es sind also zwei solche Verteilerstücke nötig, die jeweils senkrecht dazu liegende mittige Saugstutzen mit Drosselklappen aufweisen. Diese recht aufwendige Anlage wird benötigt, um eine gleichmäßige Füllung der Zylinder sicherzustellen.

Eine Luftansauganlage mit einem I-förmigen Verteilerstück ist auch in US-A-2 947 294 beschrieben. Das Verteilerstück, in das senkrecht mittig ein Saugstutzen einmündet, ist beidseitig mit Anschlußflanschen versehen, von denen die Einzelsaugrohre zu den Zylindern abgehen. Die Flansche sind durch sanft gewölbte Kappen abgedeckt. Die dadurch gebildeten kleinvolumigen Räume erlauben keine Resonanzabstimmung.

Aus GB-A-2 027 799 ist eine auf Resonanz abgestimmte Luftansauganlage bekannt, bei der jeweils drei Zylinder einer Zylinderreihe einem Resonanzbehälter zugeordnet sind. Die beiden nebeneinander liegenden Resonanzbehälter sind durch gesonderte unterschiedlich lange Rohre mit einem Dämpfungsbehälter verbunden, dem die Ansaugluft von außen zugeführt wird. Die Aufgabe der Erfindung besteht darin, durch eine besondere Gestaltung und Bemessung einer Luftansauganlage gemäß dem Oberbegriff des Anspruchs 1 eine Kostensenkung und Leistungssteigerung der Brennkraftmaschine zu erzielen.

Zur Lösung dieser Aufgabe ist die Luftansauganlage zur Schwingungsaufladung ausgebildet, indem das Gesamtvolumen der beiden Resonanzbehälter etwa gleich groß bemessen ist wie das Gesamthubvolumen aller Zylinder. Da das Volumen des jeder Zylindergruppe zugeordneten Resonanzbehälters etwa gleich groß ist wie das Hubvolumen dieser Zylindergruppe, lassen sich zwischen dem Verbindungsrohr des Verteilerstücks und den Resonanzbehältern gleichartige Resonanzbedingungen erfüllen, wie zwischen den Zylindern und den zu ihnen führenden, von den Resonanzbehälten ausgehenden Saugrohren. Auf diese Weise kommt man für eine 8-Zylinder-Brennkraftmaschine mit einem einzigen I-förmigen Verteilerstück aus und erzielt somit eine beträchtliche Kostenersparnis.

Aus DE-B-1 231 060 ist es zwar bekannt, das Volumen eines Sammelsaugrohres etwa gleich zu bemessen wie das gessamte Hubvolumen der ihm zugeordneten Zylinderreihe. Für eine Resonanzabstimmung reicht aber diese Maßnahme allein nicht aus. Hierzu ist gemäß der Erfindung ein I-förmiges Verteilerstück aus zwei annahernd gleich großen Resonanzbehältern und einem Verbindungsrohr erforderlich. Außerdem muß eben der Volumenabstimmung der Resonanzbehälter auch der Querschnitt des Verbindungsrohres auf den Querschnitt der zu einer Zylinderreihe führenden Saugrohre abgestimmt sein. Mit diesen kombinierten Abstimmungsmaßnahmen gemäß Anspruch 1 läßt sich eine Resonanzaufladung erreichen, die über einen weiten Drehzahlbereich der Brennkraftmaschine eine beträchtliche Leistungs und Drehmomentsteigerung erbringt.

Die Saugrohre sind an den Resonanzbehältern entweder an denselben Wänden angeschlossen wie das Verbindungsrohr oder zu diesem fluchtend an den gegenüberliegenden wänden. Im ersten all, der für Brennkraftmaschinen in V-Bauweise aus Platzgründen bevorzugt wird, verlaufen die Saugrohre gekrümmt und sind unterschiedlich lang, wobei Krümmung und Länge derart aufeinander abgestimmt sind, daß sich für alle Saugrohre ein annähernd gleicher Druckverlust bei Durchströmung ergibt.

Zusätzliche, die Erfindung ausgestaltende Merkmale sind in den Unteransprüchen enthalten. Zwei Ausfürungsbeispiele der Erfindung sind in der Zeichnung dargestellt und werden nachfolgend erläutert.

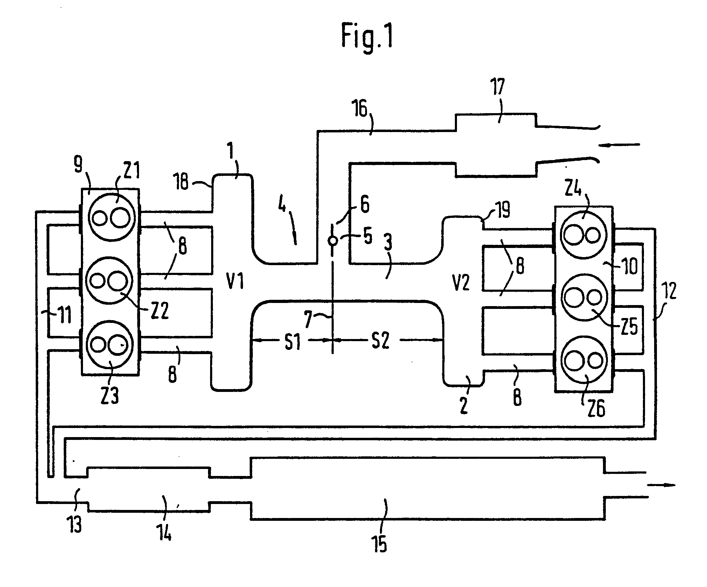

Es zeigt
Fig. 1 Luftansauganlage eines 6-Zylinder-Boxermotors,
Fig. 2 Luftansauganlage eines 8-Zylinder-V-Motors,
Fig. 3 Luftansauganlage nach Fig. 2, etwas abgewandelt, in räumlicher Darstellung.

Aus einem Resonanzbehälter 1 mit dem Volumen V1, einem Resonanzbehälter 2 mit dem Volumen V2 und einem Verbindungsrohr 3 ist ein I-förmiges Verteilerstück 4 gebildet. Senkrecht an das Verbindungsrohr 3 ist ein Saugstutzen 5 angeschlossen, der eine Drosselklappe 6 enthält. Die Mitte 7 des Saugstutzens 5 hat zum Resonanzbehälter 1 den Abstand $S1 = 0,1$ m, zum Resonanzbehälter 2 den Abstand $S2 = 0,12$ m. Entsprechend der bei der Konstruktion verwirklichten Verhältnisgleichung $\frac{V1}{V2} = \frac{S2}{S1}$ beträgt das Volumen $V1 = 1,8 \times 10^{-3} m^3$, $V2 = 1,5 \times 10^{-3} m^3$. Von den Resonanzbehältern 1 und 2 gehen je drei gerade Saugrohre 8 mit einer Länge von $1 = 0,2$ m aus, die parallel zu dem Verbindungsrohr 3 liegen und sich von den Resonanzbehältern zu den Einlaßkanälen der beiden, aus je drei Zylindern gebildeten Zylindergruppen 9, 10 hin konisch verengen. Die eine Zylindergruppe 9 umfaßt die Zylinder Z1, Z2, Z3, die andere Zylindergruppe 10 die Zylinder Z4, Z5, Z6.

Die Abgase der beiden Zylindergruppen 9, 10 sind über Abgassammelrohre 11, 12 einer Abgasleitung 13 zugeführt und gelangen nach Durchströmen eines Vorschalldämpfers 14 und eines Hauptschalldämpfers 15 ins Freie. Der Saugstutzen 5 ist über eine Saugleitung 16 mit einem Luftfilter 17 verbunden, durch das hindurch die Luft aus der Atmosphäre angesaugt wird.

Es saugen nacheinander die Zylinder Z1, Z6, Z2, Z4, Z5, Z3 entsprechend ihrer Zündfolge aus den Resonanzbehältern an, zwischen denen sich eine stehende Welle mit Nulldurchgang in der Mitte 7 des Saugstutzens ausbildet. Da die Saugrohre 8 der Zylinder an den Resonanzbehältern 1, 2 an den Seiten 18, 19 gegenüberliegend zum Verbindungsrohr 3 angeschlossen sind, ergibt sich beim Ansaugen eine annähernd diagonale Durchströmung des Verteilerstücks, die sich in den jeweiligen Saugrohren fortsetzt.

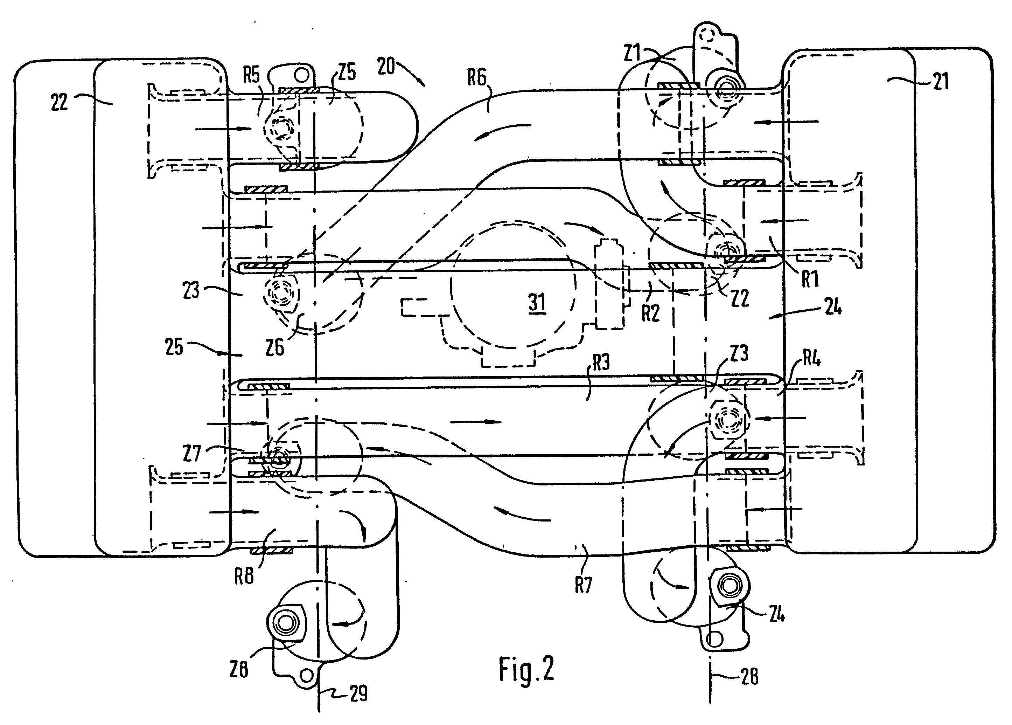

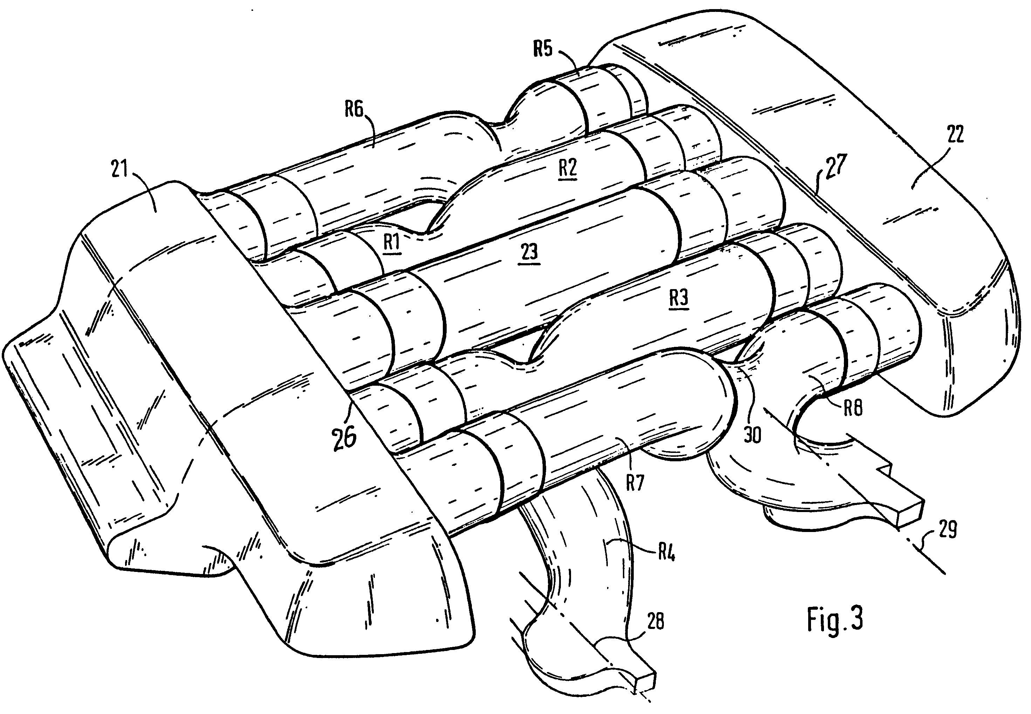

Eine anders gestaltete Luftansauganlage ist in Fig. 2 dargestellt; Fig. 3 gibt von ihr eine schematische räumliche Darstellung. Die Luftansauganlage besteht aus einem Verteilerstück 20, das aus den Resonanzbehältern 21, 22, mit den Volumina V21, V22 und dem Verbindungsrohr 23 zusammengesetzt ist. Das Verteilerstück 20 ist zwischen den beiden V-förmig zueinanderliegenden Zylindergruppen 24, 25 einer 8-Zylinder-Brennkraftmaschine angeordnet, wobei die Zylindergruppe 24 die Zylinder Z1, Z2, Z3, Z4, die Zylindergruppe 25 die Zylinder Z5, Z6, Z7, Z8 umfaßt. Zu den Zylindern führen Saugrohre R1 bis R8, die sämtliche an denselben Seiten 26 und 27 der Resonanzbehälter 21, 22 angeschlossen sind, wie das Verbindungsrohr 23. Die Saugrohre der einen Zylindergruppe 24 enden in der gemeinsamen Flanschebene 28 des einen Zylinderkopfes, die Saugrohre der anderen Zylindergruppe 25 in der Flanschebene 29 des anderen Zylinderkopfes. Die beiden inneren Zylinder Z2, Z3 der Zylindergruppe 24 sind durch schwach gebogene Saugerohre R2, R3 an dem der anderen Zylindergruppe 25 benachbarten Resonanzbehälter 22 angeschlossen. Zu den inneren Zylindern Z6, Z7 der Zylindergruppe 25 führen Saugrohre R6, R7, die von dem der Zylindergruppe 24 benachbarten Resonanzbehälter 24 ausgehen. Dagegen sind die äußeren Zylinder Z1 und Z4 sowie Z5 und Z8 jeweils durch Saugrohre R1 und R4 sowie R5 und R8 an dem ihnen benachbarten Resonanzbehälter 24 bzw. 25 angeschlossen. Diese Saugrohre R1, R4, R5, R8 sind kürzer als die inneren Saugrohre und weisen eine stärkere Krümmung auf, die bis zu einer 180°-Umlenkung geht. Um eine ausreichende Saugrohrlänge zu erhalten, reichen diese ein Stück weit in das Innere der Resonanzbehälter 21, 22 hinein. Jeweils ein kürzeres und ein gleichachsig dazu am anderen Resonanzbehälter angeschlossenes, längeres Saugrohr, sind zu einem Gußteil zusammengegossen, wobei die Angußstelle durch eine Rippe 30 versteift ist. Mittig am Verbindungsrohr 23 zweigt senkrecht ein Saugstutzen 31 ab, über den die Luft aus einem nicht gezeichneten Luftfilter angesaugt wird.

Neben der Größe der Volumina V1, V2 bzw. V21, V22 der Resonanzbehälter ist entscheidend für die Resonanzabstimmung die Gesamtlänge 1 des Strömungsweges von dem Einlaßventil der einen Zylindergruppe zu dem anschließend öffnenden Einlaßventil der gegenüberliegenden Zylindergruppe. Wenn die Summe aus den Strömungsquerschnitten der zu einer Zylindergruppe führenden Saugrohre gleich groß gemacht wird wie der Strömungsquerschnitt des Verbindungsrohres, läßt sich die Schwingaufladung optimal gestalten und auch rechnerisch erfassen. In diesem Fall gilt zwischen der Resonanzdrehzahl n, also der Drehzahl, bei der Resonanz zwischen der Brennkraftmaschine und der Eigenfrequenz f der Luftansauganlage eintritt, die Beziehung:

$$>>> \tan \frac{\pi \cdot l}{c} \cdot \frac{n \cdot z}{240} = \sqrt{\frac{f \cdot c \cdot 120}{\pi \cdot n \cdot z}}$$

$>>>$ Hierin bedeuten: $\pi = 3{,}14$

$l = $ Gesamtströmungsweg [m]

$c = $ Schallgeschwindigketi Ansaugluft $\left[\frac{m}{s}\right] \approx 340 \frac{m}{s}$

$n = $ Drehzahl der Brennkraftmaschine $\left[\frac{1}{min}\right]$

$z = $ Anzahl der Zylinder

$V = $ zeitlich im Mittel an das Verbindungsrohr angeschlossenes Zylindervolumen [m³]

$f = $ Eigenfrequenz $\left[\frac{1}{s}\right]$

## Patentansprüche

1. Luftansauganlage einer Mehrzylinder-Brennkraftmaschine, deren Zylinder in Boxer- oder V-Bauart zu zwei gleichen, einander gegenüberliegenden Zylindergruppen zusammengefaßt sind, zwischen denen als gemeinsame Luftansauganlage ein I-förmiges, zur Schwingaufladung ausgebildetes Verteilerstück aus zwei annähernd gleich großen Resonanzbehältern (1, 2 bzw. 21, 22) und einem Verbindungsrohr (3, 23) angeordnet ist, wobei jeder Zylindergruppe ein Resonanzbehälter benachbart und durch Saugrohre (8, R1 bis R8) zu den einzelnen Zylindern mit ihr verbunden ist, dadurch gekennzeichnet, daß zur Schwingaufladung das Gesamtvolumen (V1 + V2 bzw. V21 + V22) der Resonanzbehälter (1, 2 bzw. 21, 22) etwa gleich groß bemessen ist wie das Gesamthubvolumen aller Zylinder der Brennkraftmaschine und daß die Gesamtquerschnittsfläche der zu einer Zylindergruppe führenden Saugrohre (3, R1 bis R8) etwa gleich groß ist wie die Querschnittfläche des Verbindungsrohres (3, 23).

2. Luftansauganlage nach Anspruch 1, dadurch gekennzeichnet, daß die Saugrohre (R1 bis R8) der Zylinder (Z1 bis Z8) an denselben Seiten der Resonanzbehälter (21, 22) angeschlossen sind wie die beiden Enden des Verbindungsrohres (23).

3. Luftansauganlage nach Anspruch 2, für eine Brennkraftmaschine mit 8 Zylindern, dadurch gekennzeichnet, daß die Saugrohre (R2, R3; R6, R7) der beiden inneren Zylinder (Z2, Z3; Z6, Z7) jeder Zylindergruppe jeweils an dem der gegenüberliegenden Zylindergruppe benachbarten Resonanzbehälter angeschlossen sind, wogegen die Saugrohre (R1, R4; R5, R8) der beiden äußeren Zylinder (Z1, Z4; Z5, Z8) an den

ihnen benachbarten Resonanzbehältern angeschlossen sind.

4. Ansauganlage nach Anspruch 1, dadurch gekennzeichnet, daß die Saugrohre annähernd parallel zueinander und zum Verbindungsrohr liegen.

5. Luftansauganlage nach einem der Ansprüche 1 bis 4, dadurch gekennzeichnet, daß zu den beiden inneren Zylindern (Z2, Z3; Z6, Z7) jeder Zylindergruppe schwach gebogene Saugrohre (R2, R3; R6, R7) führen, wogegen zu den beiden äußeren Zylindern stark gekrümmte, kürzere Saugrohre (R1, R4; R5, R8) mit etwa 180° Umlenkung führen.

6. Luftansauganlage nach Anspruch 5, dadurch gekennzeichnet, daß jeweils an dem einen Resonanzbehälter ein schwach gebogenes Saugrohr und gleichachsig dazu an dem anderen Resonanzbehälter ein stark gekrümmtes Saugrohr angeschlossen ist.

7. Luftansauganlage nach Anspruch 6, dadurch gekennzeichnet, daß jeweils ein schwach gekrümmtes und ein stark gekrümmtes, kürzeres Saugrohr als Einheit zusammengegossen ist.

8. Luftansauganlage nach Anspruch 1 und 4, dadurch gekennzeichnet, daß die Saugrohre (8) an den Resonanzbehältern (1, 2) an den den Anschlußstellen des Verbindungsrohres (3) gegenüberliegenden Seiten (18, 19) angeschlossen sind.

9. Luftansauganlage nach Anspruch 8, dadurch gekennzeichnet, daß senkrecht in das Verbindungsrohr (3) ein Saugstutzen (5) einmündet, dessen Mitte (7) zum einen Resonanzbehälter (1) einen Abstand (S1), zum anderen Resonanzbehälter (2) einen gößeren Abstand (S2) hat.

10. Luftansauganlage nach einem der Ansprüche 9, dadurch gekennzeichnet, daß zwischen den Volumina (V1, V2) und den Abständen (S1, S2) der Resonanzbehälter (1, 2) die Beziehung besteht: $\frac{V1}{V2} = \frac{S2}{S1}$

11. Luftansauganlage nach einem der Ansprüche 8 bis 10, dadurch gekennzeichnet, daß sich die Saugrohre (8) zu den Zylindern (Z1 bis Z6) hin konisch verengen.

12. Luftansauganlage nach einem der Ansprüche 1 bis 11, dadurch gekennzeichnet, daß die Saugrohre so geformt und ihre Längen und Durchmesser so bemessen sind, daß sich ein etwa gleich großer Durchflußwiderstand in den Saugrohren ergibt.

13. Luftansauganlage nach Anspruch 5, 6 oder 7, dadurch gekenneichnet, daß die stark gekrümmten Saugrohre (R1, R4; R5, R8) ein Stück weit in die Resonanzbehälter (21, 22) hineinragen.

## Claims

1. An air intake system for a multi-cylinder internal combustion engine having cylinders arranged as two equal opposing groups in opposed cylinder or V construction fashion, and a common air intake system arranged between the groups and being formed as an I-shaped distribution member for oscillation supercharging and comprising two approximately equal-sized resonance chambers (1, 2 or 21, 22) and a connecting pipe (3, 23), wherein resonance chamber is arranged adjacent each group of cylinders and is connected thereto via intake pipes (8, R1 to R8) to the individual cylinders, characterised in that for the purpose of oscillation supercharging the total volume (V1 + V2 or V21 + V22) of the resonance chambers (1, 2 or 21, 22) is approximately equal to the total stroke volume of all the cylinders of the internal combustion engine, and the total cross-sectional area the intake pipes (8, R1 to R8) leading to one group of cylinders is approximately equal to the cross-sectional area of the connecting pipe (3, 23).

2. An air intake system according to claim 1 characterised in that the intake pipes (R1 to R8) of the cylinders (Z1 to Z8) are connected to the same sides of the resonance chambers (21, 22) as the two ends of the connecting pipe (23).

3. An air intake system according to claim 2 for an 8-cylinder internal combustion engine, characterised in that the intake pipes (R2, R3; R6, R7) of the two inner cylinders (Z2, Z3; Z6, Z7) in each group are connected to the respactive resonance chamber adjacent the opposite cylinder group, whereas the intake pipes (R1, R4: R5, R8) of the two outer cylinders (Z1, Z4; Z5, Z8) are connected to the adjacent resonance chambers.

9. An intake system according to claim 1. characterised in that the suction pipes are approximately parallel to one another and to the connecting pipe.

5. An air intake system according to any one of claims 1 to 4, characterised in that slightly bent suction pipes (R2, R3; R6, R7) lead to the two inner cylinders (Z2, Z3; Z6, Z7) in each group whereas substantially bent, shorter suction pipes (R1, R4: R5; R8) with an approximately 180° bend lead to the two outer cylinders.

6. An air intake system according to claim 5. characterised in that in each case a slightly bent intake pipe is connected to one resonance chamber and a substantially bent intake pipe coaxial with the slightly bent intake pipe is connected to the other resonance chamber.

7. An air intake system according to claim 6. characterised in that in each case a slightly bent and a substantially bent, shorter intake pipe are cast together as a unit.

8. An air intake system according to claims 1 and 4, characterised in that the intake pipes (8) are connected to the resonance chambers (1, 2) on the opposite sides (18, 19) to the connections of the connecting pipe (3).

9. An air intake system according to claim 8, characterised in that an induction pipe (5) opens at right angles into the connecting pipe (3) and its centre is at a distance (S1) from one resonance chamber (1) and at a larger distance (S2) from the other resonance chamber (2).

10. An air intake system according to any one of claims 9, characterised in that the volumes (V1, V2) and the distances (S1, S2) from the resonance chambers (1, 2) are related as follows:
$$\frac{V1}{V2} = \frac{S2}{S1}$$

11. An air intake system according to any one of claims 8 to 10, characterised in that the intake pipes (8) taper conically inwards towards the cylinders (Z1 to Z6).

12. An air intake system according to any one of claims 1 to 11, characterised in that the intake pipes are shaped, and their lengths and diameters are dimensioned, so as to produce an approximately equal flow resistance in the intake pipes.

13. An air intake system according to claims 5, 6 or 7, characterised in that the substantially bent intake pipes (R1, R4; R5, R8) extend some distance into the resonance chambers (21, 22).

## Revendications

1. Système d'aspiration d'air sur un moteur multicylindres à combustion interne, dont les cylindres sont réunis en deux groupes opposés, soit à plat selon la disposition dite "boxer", ou bien en V, entre lesquels groupes est disposé, en tant que système commun d'aspiration d'air, un collecteur en forme de I conformé en vue du remplissage pulsatoire forcé, constitué de deux cavités résonantes (1, 2; 21, 22) de tailles sensiblement égales, et d'un tube de jonction (3; 23), chaque groupe de cylindres étant proche d'une cavité résonante et relié à celle-ci par des pipes d'admission (8; R1 à R8) allant individuellement vers chaque cylindre, caractérisé en ce que, pour le remplissage pulsatoire forcé, le volume total (V1 + V2; V21 + V22) des cavités résonantes (1, 2; 21, 22) est sensiblement égal à la cylindrée totale de l'ensemble des cylindres du moteur et que la surface totale des sections transversales des pipes d'admission (8; R1 à R8) conduisant à un des groupes de cylindres est approximativement égale à la surface de la section transversale du tube de jonctiion (3; 23).

2. Système d'aspiration d'air selon la revendication 1, caractérisé en ce que les pipes d'admission (R1 à R8) des cylindres (Z1 à Z8) sont raccordées sur les mêmes côtés des cavités résonantes (21, 22) que les deux extrémités du tube de jonction (23).

3. Système d'aspiration d'air selon la revendication 2 pour un moteur à huit cylindres, caractérisé en ce que les pipes d'admission (R2, R3; R6, R7) des deux cylindres intérieurs (Z2, Z3; Z6, Z7) de chaque groupe de cylindres sont respectivement raccordées à la cavité résonante proche du groupe de cylindres opposé, tandis qu'au contraire les pipes d'admission (R1, R4; R5, R8) des deux cylindres extérieurs (Z1, Z4; Z5, Z8) sont raccordées à la cavité de résonance qui leur est proche.

4. Système d'aspiration d'air selon la revendication 1, caractérisé en ce que les pipes d'admission sont disposés à peu près parallèlement entre elles et au tube de jonction.

5. Système d'aspiration d'air selon une des revendications 1 à 4, caractérisé en ce que les deux cylindres intérieurs (Z2, Z3; Z6, Z7) de chaque groupe de cylindres sont reliés à des pipes d'admission peu incurvées (R2, R3; R6, R7), tandis qu'au contraire les deux cylindres extérieurs sont reliés à des pipes d'admission fortement incurvées et plus courtes (R1, R4; R5, R8), recourbées à 180° environ.

6. Système d'aspiration d'air selon la revendication 5, caractérisé en ce que sont raccordées respectivement: à une des cavités résonantes une pipe d'admission peu incurvée, et coaxialement à celle-ci, à l'autre cavité résonante, une pipe d'admission fortement incurvée.

7. Système d'aspiration d'air selon la revendication 6, caractérisé en ce que, chaque fois, une pipe d'admission peu incurvée et une pipe d'admission fortement recourbée et plus courte, sont moulées ensemble d'une seule pèice de fonderie.

8. Système d'aspiration d'air selon les revendications 1 et 4, caractérisé en ce que les pipes d'admission (8) sont raccordées aux cavités résonantes (1, 2) sur les côtés (18, 19) opposés aux emplacements de raccordement du tube de jonction (3).

9. Système d'aspiration d'air selon la revendication 8, caractérisé en ce qu'une tubulure d'aspiration (5) débouche perpendiculairement dans le tube de jonction (3), le milieu (7) de cette tubulure étant à une distance (S1) d'une des cavités résonantes (1) et à une distance (S2) plus grande de l'autre cavité résonante (2).

10. Système d'aspiration d'air selon l'une des revendications 1 à 9, caractérisé en ce qu'il existe entre les volumes (V1, V2) et les distances (S1, S2) des cavités résonantes, la relation: $\frac{V1}{V2} = \frac{S2}{S1}$

11. Système d'aspiration d'air selon une des revendications 8 à 10, caractérisé en ce que les pipes d'admission (8) présentent, en direction des cylindres (Z1 à Z8) une forme tronconique avec une section progressivement décroissante.

12. Système d'aspiration d'air selon une des revendications 1 à 12, caractérisé en ce que les pipes d'admission sont conformées et dimensionnées, en longueur et en diamètre, de telle sorte qu'il en résulte une résistance à l'écoulement sensiblement égale dans les pipes d'admission.

13. Système d'aspiration d'air selon la revendication 5, 6 ou 7, caractérisé en ce que les pipes d'admission fortement recourbées (R1, R4; R5, R8) font légèrement saillie à l'intérieur des cavités résonantes (21, 22).

# Fig.1

Fig.2

Fig.3

0 158 008